# EUROPÄISCHE PATENTSCHRIFT

(11) **EP 2 855 181 B1**
(45) Veröffentlichungstag und Bekanntmachung des Hinweises auf die Patenterteilung: **19.12.2018**
(21) Anmeldenummer: 13736477.4
(22) Anmeldetag: 29.05.2013
(51) Int. Cl.: B60J 7/02

(54) **BAUKASTENSYSTEM EINES SCHIEBE- ODER HEBEDACHES FÜR FAHRZEUGDÄCHER SOWIE VERFAHREN ZUM HERSTELLEN EINES SOLCHEN SCHIEBE- ODER HEBEDACHES FÜR FAHRZEUGDÄCHER**
MODULAR SYSTEM FOR A SLIDING OR POP-UP ROOF FOR VEHICLE ROOFS AND METHOD FOR PRODUCING SUCH A SLIDING OR POP-UP ROOF
SYSTÈME DE CONSTRUCTION MODULAIRE D'UN TOIT OUVRANT COULISSANT OU ENTREBÂILLANT POUR PAVILLONS DE VÉHICULES AINSI QUE PROCÉDÉ POUR FABRIQUER UN TEL TOIT OUVRANT COULISSANT OU ENTREBÂILLANT POUR PAVILLONS DE VÉHICULE

(30) Priorität: 02.06.2012 DE 102012010999
(43) Veröffentlichungstag der Anmeldung: 08.04.2015
(73) Patentinhaber: Daimler AG, 70327 Stuttgart (DE)
(72) Erfinder: DÖFFINGER, Stefan, 71263 Weil der Stadt (DE); HESSLINGLER, Andreas, 71642 Ludwigsburg (DE); KOBER, Peer-Olaf, 71120 Grafenau (DE); SCHRADER, Jürgen, 71093 Weil im Schönbuch (DE)
(74) Vertreter: JENSEN & SON
(86) Internationale Anmeldenummer: PCT/EP2013/001579
(87) Internationale Veröffentlichungsnummer: WO 2013/178354

(56) Entgegenhaltungen:
- DE-A1- 10 230 443
- DE-A1-102004 019 995
- DE-A1-102009 035 733
- DE-C1- 19 828 464
- US-A1- 2010 038 933

## Beschreibung

Die Erfindung betrifft Baukastensystem eines Schiebe- oder Hebedaches für Fahrzeugdächer.

Ein Baukastensystem gemäß dem Oberbegriff des Anspruchs 1 ist aus US 2010/0038933 A1 bekannt.

Aus dem Serienbau von Personenfahrzeug sind Schiebe- oder Hebedächer für Fahrzeugdächer hinlänglich bekannt. Ein solches Schiebe- oder Hebedach umfasst ein Deckelelement sowie ein Rahmenelement, mittels welchem das Deckelelement an dem Fahrzeugdach zu halten ist. Das Rahmenelement und das Deckelelement können dabei ein Dachmodul darstellen, welches in eine Dachöffnung des Fahrzeugdaches einsetzbar und so zeit- und kostengünstig montierbar ist.

Das Deckelelement ist dabei mittels eines Dachantriebs relativ zum Rahmenelement zwischen einer die Dachöffnung verschießenden Schließstellung und wenigstens einer die Dachöffnung zumindest teilweise freigebenden Offenstellung verstellbar.

Um ein solches Schiebe- oder Hebedach in unterschiedlichen Varianten eines Personenfahrzeugs verwenden zu können, ist es erforderlich, dass die jeweiligen Konturen der Dächer beziehungsweise der Dachöffnungen des Personenfahrzeugs weitgehend gleich sind, das heißt, dass der Verlauf der sogenannten D-Linien gleich ist. Die D-Linien beschreiben den Verlauf des in Fahrzeughochrichtung oberen Abschnitts der Rohbaukante im Übergang zu der Dachöffnung. Die D-Linie beschreibt damit die Breite der sichtbaren Dachöffnung und den sogenannten Zug, das heißt den Verlauf der Rohbaukante bezogen auf die Fahrzeugmittellinie in Längserstreckung des Fahrzeugs.

Weisen die Dachöffnungen der Personenfahrzeuge unterschiedliche Geometrien auf, so ist es herkömmlicher Weise erforderlich, separate Schiebe- oder Hebedächer zu konstruieren und dabei an die unterschiedlichen Geometrien anzupassen. Dies ist insbesondere der Fall, wenn sich die Dachöffnungen hinsichtlich ihrer Breite unterscheiden. Zur Herstellung dieser unterschiedlichen Schiebe- oder Hebedächer sind unterschiedliche Werkzeuge vonnöten. Daraus resultieren hohe Herstellkosten zur Realisierung der Schiebe- oder Hebedächer bei unterschiedlichen Fahrzeugdächern.

Es ist daher Aufgabe der vorliegenden Erfindung, ein Baukastensystem eines Schiebe- oder Hebedaches für Fahrzeugdächer bereitzustellen, welches eine kostengünstige Realisierung eines Schiebe- oder Hebedaches für unterschiedliche Fahrzeugdächer ermöglicht.

Diese Aufgabe wird durch ein Baukastensystem mit den Merkmalen des Anspruchs 1 gelöst. Vorteilhafte Ausgestaltungen mit zweckmäßigen und nicht-trivialen Weiterbildungen der Erfindung sind in den übrigen Ansprüchen angegeben.

Die Auslegung des Schiebe- oder Hebedachs erfolgt dabei vorzugsweise auf die kleinste Dachöffnung der verschiedenen Fahrzeugvarianten, um sicherzustellen, dass der Bauraum bei der Übertragung auf andere Fahrzeugvarianten ausreichend ist. In diesem Baukastensystem werden erfindungsgemäß die Abmaße des Deckelelements und des Rahmenelements variiert und damit die Anpassung an andere Dachöffnungen und damit an andere D-Linien vorgenommen.

Damit umfasst das Baukastensystem wenigstens ein zweites Deckelelement und wenigstens ein zweites Rahmenelement zum Halten des zweiten Deckelelements an einem zweiten Fahrzeugdach. Das zweite Deckelelement und das zweite Rahmenelement sind dabei zumindest hinsichtlich ihrer jeweiligen Geometrie an das zweite Fahrzeugdach angepasst, wobei das zweite Fahrzeugdach hinsichtlich seiner Geometrie zum ersten Fahrzeugdach unterschiedlich ist.

Die Fahrzeugdächer weisen beispielsweise jeweilige Dachöffnungen mit unterschiedlichen Breiten oder Längen auf, in welche die zugehörigen Rahmen- und Deckelelemente eingesetzt werden können.

Das Baukastensystem umfasst darüber hinaus eine Kinematik mit einem Dachantrieb, mittels welchem das jeweilige Deckelelement relativ zu dem zugehörigen Rahmenelement zwischen einer die jeweilige Dachöffnung des entsprechenden Fahrzeugdaches verschließenden Schließstellung und wenigstens einer die Dachöffnung zumindest teilweise freigebenden Offenstellung verstellbar ist.

Für verschiedene Varianten von Dachöffnungen kann die gleiche Kinematik mit dem gleichen Dachantrieb verwendet werden. Somit können trotz der unterschiedlichen Fahrzeugdächer die Schiebe- oder Hebedächer mit einer besonders hohen Anzahl an Gleichteilen dargestellt werden, was zu einer besonders kostengünstigen Realisierbarkeit der Schiebe- oder Hebedächer führt.

Die konstruktive Gesamtauslegung des Schiebe- oder Hebedaches, insbesondere hinsichtlich einer Kinematik zum Verstellen des Deckelelements, hinsichtlich Verstärkungselementen und einer Durchsicht durch ein beispielsweise transparent ausgebildetes Deckelelement erfolgt dabei beispielsweise auf das kleinere, insbesondere schmalere der Fahrzeugdächer. Durch einfache Variation des Deckelelements und des Rahmenelements können diese in ihrer Geometrie, insbesondere in ihrer Breite, angepasst werden, so dass auch bei dem größeren, insbesondere breiteren, Fahrzeugdach ein Schiebe- oder Hebedach kostengünstig realisiert werden kann.

Ebenso kann die Gesamtauslegung zunächst auf das größere, insbesondere breitere der Fahrzeugdächer erfolgen, um dann das Rahmenelement und das Deckelelement auf das kleinere Fahrzeugdach anzupassen. Die Setzung muss aber auf das erwartete Kleinstmaß erfolgen, um sicherzustellen, dass für die Anordnung der nicht angepassten Bauteile auch in diesem Fall ausreichend Bauraum zur Verfügung steht.

Diese einfache Variation der Geometrie des Rahmenelements und des Deckelelements ist beispielsweise derart realisiert, dass das erste Deckelelement und das erste Rahmenelement mit wenigstens einem jeweiligen, ersten Werkzeugteil eines jeweiligen Werkzeugs hergestellt werden, während das zweite Deckelelement und das zweite Rahmenelement mit einem jeweiligen, zweiten Werkzeugteil des jeweiligen Werkzeugs hergestellt werden. Mit anderen Worten werden zur Herstellung der unterschiedlichen Deckelelemente und Rahmenelemente lediglich die Werkzeugteile als austauschbare Wechseleinsätze ausgebildet, so dass die Deckelelemente trotz ihrer unterschiedlichen Geometrie ebenso wie die Rahmenelemente trotz ihrer unterschiedlichen Geometrie mit dem jeweils gleichen Werkzeug hergestellt werden können. Die Werkzeugteile stellen somit Wechseleinsätze des jeweiligen Werkzeugs dar, wodurch das jeweilige Werkzeug so flexibel gestaltet ist, das die Deckelelemente und die Rahmenelemente an die unterschiedlichen Geometrien der Fahrzeugdächer angepasst werden können, ohne das übrige, jeweilige Fahrzeugdach zu beeinträchtigen.

So ist es auf einfache, zeit- und kostengünstige Weise möglich, ausgehend von der Gesamtauslegung und einer zugehörigen Grundkonstruktion die Deckelelemente und das Rahmenelement durch die Verwendung der austauschbaren beziehungsweise wechselbaren Werkzeugteile am jeweiligen Werkzeug auf die unterschiedlichen Fahrzeugdächer anzupassen und somit beispielsweise unterschiedliche Breiten, unterschiedliche Züge und insbesondere unterschiedliche D-Linien zu realisieren.

Die Gesamtauslegung der Grundkonstruktion des Schiebe- oder Hebedaches erfolgt dabei so, dass eine Variation der Geometrie der Deckelelemente und der Rahmenelemente durch Verwendung der unterschiedlichen Werkzeugteile möglich ist.

Weitere Vorteile und Einzelheiten der Erfindung ergeben sich aus der nachfolgenden Beschreibung eines bevorzugten Ausführungsbeispiels sowie anhand der Zeichnung. Dabei zeigen:
- Fig. 1: eine schematische Draufsicht eines Schiebe- oder Hebedaches für ein Fahrzeugdach;
- Fig. 2: eine weitere schematische Draufsicht des Schiebe- oder Hebedaches gemäß Fig. 1;
- Fig. 3: eine schematische Draufsicht eines weiteren Schiebe- oder Hebedaches für ein weiteres Fahrzeugdach;
- Fig. 4: ausschnittsweise eine schematische Schnittansicht einer Anordnung eines Dachmoduls eines Schiebe- oder Hebedaches an einem Rohbau eines Personenfahrzeugs; und
- Fig. 5: ausschnittsweise eine schematische Schnittansicht einer weiteren Ausführungsform der Anordnung gemäß Fig. 4.

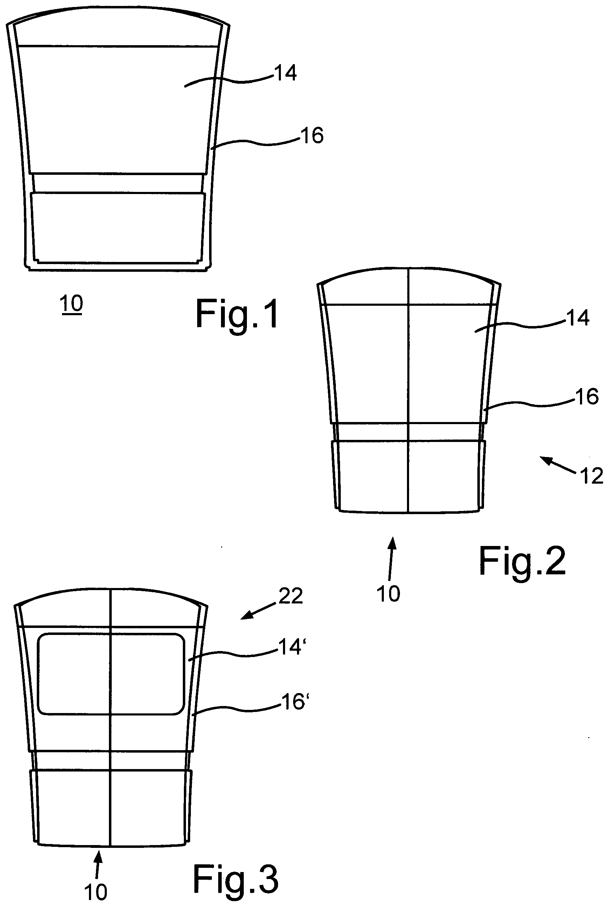

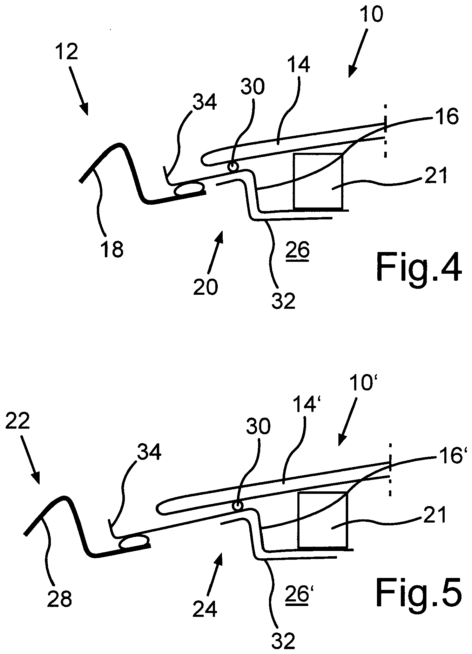

Fig. 1 zeigt ein sogenanntes außenlaufendes Schiebedach 10 für ein erstes Fahrzeugdach 12 (Fig. 2) eines Personenfahrzeugs. Das außenlaufende Schiebedach 10 umfasst ein erstes Deckelelement 14 und ein erstes Rahmenelement 16. Wie in Zusammenschau mit Fig. 4 und 5 erkennbar ist, ist das erste Rahmenelement 16 an einem Rohbau 18, an dem ein erstes Fahrzeugdach 12 ausgebildet ist, befestigbar. Das erste Rahmenelement 16 dient dem Halten des ersten Deckelelements 14. Somit ist das erste Deckelelement 14 über das erste Rahmenelement 16 am Rohbau 18 befestigt.

Das erste Deckelelement 14 ist dabei zwischen einer eine erste Dachöffnung 20 des ersten Fahrzeugdaches 12 verschließenden Schließstellung und wenigstens einer die erste Dachöffnung 20 zumindest teilweise freigebenden Offenstellung relativ zum ersten Rahmenelement 16 im Wesentlichen in Fahrzeuglängsrichtung verschiebbar. Zum Verschieben des ersten Deckelelements 14 dient ein Dachantrieb 21 (Fig. 4 und 5) mit einer Kinematik.

Wie Fig. 1 und 2 zu entnehmen ist, weist das erste Fahrzeugdach 12 bezogen auf die Draufsicht eine gewisse D-Linie, das heißt einen gewissen Zug und insbesondere eine gewisse Breite in Fahrzeugquerrichtung auf.

Fig. 3 zeigt ein zweites Fahrzeugdach 22, welches hinsichtlich seiner D-Linie und insbesondere hinsichtlich seiner Breite vom ersten Fahrzeugdach 12 unterschiedlich ist. Dabei ist auch insbesondere eine zweite Dachöffnung 24 des zweiten Fahrzeugdaches 22 breiter als die erste Dachöffnung 20.

Dem zweiten Fahrzeugdach 22 ist nun ein zweites außenlaufendes Schiebedach 10' zugeordnet, welches ein zweites Deckelelement 14' und ein zweites Rahmenelement 16' umfasst. Das zweite Deckelelement 14' und das zweite Rahmenelement 16' weisen dabei gleiche Funktionen wie das erste Deckelelement 14 und das zweite Rahmenelement 16 auf.

Fig. 4 zeigt eine erste Anordnung 26 des ersten außenlaufenden Schiebedaches 10 am ersten Rohbau 18 des zugehörigen Personenfahrzeugs. Fig. 5 zeigt eine zweite Anordnung 26' des zweiten außenlaufenden Schiebedaches 10' an einem zweiten Rohbau 28 des zweiten Fahrzeugdaches 22. Das jeweilige Rahmenelement 16, 16' weist einen im Wesentlichen Z-förmigen Querschnitt auf. Der dem Rohbau 18, 28 zugewandte Schenkel des Rahmenelementes 16, 16' ist von oben auf dem Rohbau 18, 28 angeordnet. Das Deckelelement 14, 14' ist ebenfalls von oben auf dem dem Rohbau 18, 28 zugewandten Schenkel des Rahmenelementes 16, 16' angeordnet und mittels der Dichtung 30 gegenüber diesem abgedichtet. Weiterhin ist zwischen dem zweiten Schenkel des Rahmenelementes 16, 16' und dem Deckelelement 14, 14' der Dachantrieb 21 angeordnet. Das Verstärkungselement 32 ist ebenfalls im Wesentlichen Z-förmig ausgebildet und im Bereich des Übergangs zwischen den beiden Schenkel des Rahmenelementes 16, 16' und des Dachantriebs 21 angeordnet.

Wie Fig. 4 und 5 zu entnehmen ist, unterscheiden sich die außenlaufenden Schiebedächer 10, 10' lediglich bezüglich ihres jeweiligen Rahmenelements 16, 16' sowie hinsichtlich ihres jeweiligen Deckelelements 14, 14'. Dabei sind das zweite Deckelelement 14' und das zweite Rahmenelement 16' an die breitere, zweite Dachöffnung 24 angepasst und sind entsprechend breiter als das erste Deckelelement 14 und das erste Rahmenelement 16. Das erste Deckelelement 14 und das erste Rahmenelement 16 sind an die schmalere, erste Dachöffnung 20 angepasst.

Bei den außenlaufenden Schiebedächern 10, 10' werden jedoch gleiche Dachantriebe 21 zum Antreiben der Deckelelemente 14, 14' sowie gleiche Dichtungselemente 30 verwendet, wobei das jeweilige Dichtungselement 30 zum Abdichten des jeweiligen Deckelelements 14, 14' gegen das jeweilige Rahmenelement 16, 16' dient. Darüber hinaus werden bei beiden außenlaufenden Schiebedächern 10, 10' gleiche Verstärkungselemente 32 zum Verstärken des jeweiligen Rahmenelements 16, 16' verwendet. Die Rahmenelemente 16, 16' weisen einen jeweiligen Flansch 34 auf, an welchem ein jeweiliges Zierelement, insbesondere ein Zierstab, befestigbar ist.

Eine Grundkonstruktion mit einer Gesamtauslegung der außenlaufenden Schiebedächer 10, 10' erfolgt beispielsweise auf das kleinere, erste Fahrzeugdach 12. Die Grundkonstruktion mit der Gesamtauslegung erfolgt jedoch so, dass eine Anpassung des ersten Deckelelements 14 und des ersten Rahmenelements 16 an unterschiedliche Geometrien der Fahrzeugdächer 12, 22 und insbesondere an die größere Breite des zweiten Fahrzeugdaches 22 mittels auswechselbarer Werkzeugteile von jeweiligen Werkzeugen zum Herstellen der Deckelelemente 14, 14' und der Rahmenelemente 16, 16' auf einfache Weise möglich ist.

Alternativ dazu kann ein Grundkonstruktion mit einer entsprechenden Gesamtauslegung auf das größerer beziehungsweise breitere, zweite Fahrzeugdach 22 erfolgen, von dem ausgehend eine einfache Geometrieanpassung, insbesondere Breitenanpassung, auf das schmalere, erste Fahrzeugdach 12 mittels der auswechselbaren Werkzeugteile möglich ist.

Durch diese Grundkonstruktion können Maße für das Zierelement, die Rohbauanbindung und die Montagewerkzeuge unverändert übernommen werden, trotz der unterschiedlichen Breiten der Fahrzeugdächer 12, 22 beziehungsweise ihrer Dachöffnungen 20, 24. Die Fahrzeugdächer 12, 22 können sich auch hinsichtlich ihres jeweiligen Zugs unterscheiden, wobei ausgehend von der Grundkonstruktion eine einfach Anpassung möglich ist. Ferner können Hauptkomponenten der außenlaufenden Schiebedächer 10, 10' wie der Dachantrieb 21 mit der Mechanik, die Verstärkungselemente 32, die Dichtungselemente 30 sowie gegebenenfalls weitere Komponenten unverändert übernommen und für beide Fahrzeugdächer trotz der unterschiedlichen Geometrien verwendet werden. Es sind lediglich die Rahmenelemente 16, 16' und die Deckelelemente 14, 14' beziehungsweise deren jeweiliges Werkzeug mittels der auswechselbaren Werkzeugteile flexibel zu gestalten.

Die Deckelelemente 14, 16 können zumindest teilweise transparent ausgebildet und insbesondere aus Glas hergestellt sein wobei auch - ausgehend von der Grundkonstruktion - Durchsichtsmaße beibehalten werden können. Die außenlaufenden Schiebedächer 10, 10' sind insbesondere vorteilhaft als Panoramadächer verwendbar, welche sich über eine besonders große Länge der Fahrzeugdächer 12, 22 erstrecken.

## Patentansprüche

1. Baukastensystem für Hebe- oder Schiebedächer (10, 10') zur Anwendung bei verschiedenen Dachöffnungen (20, 24) von Fahrzeugdächern (12, 22),
- wobei ein Hebe- oder Schiebedach zumindest ein Deckelelement (14, 14'), eine Kinematik mit einem Dachantrieb (21) zum Verstellen des Deckelelements (14, 14') zwischen einer die Dachöffnung öffnenden und einer die Dachöffnung verschließenden Position, und ein Rahmenelement zur Anordnung des Deckelelements und der Kinematik mit dem Dachantrieb an dem jeweiligen Fahrzeugdach aufweist,
- wobei zur Anpassung an unterschiedliche Dachöffnungen angepasste Rahmenelemente (16, 16') und Deckelelemente (14, 14') bereitgestellt sind,
- wobei wenigstens ein Dichtungselement (30) vorgesehen ist, mittels welchem das jeweilige Deckelelement (14, 14') und das jeweils zugehörige Rahmenelement (16, 16') gegeneinander abdichtbar sind,
- wobei das jeweilige Rahmenelement (16, 16') einen im Wesentlichen Z-förmigen Querschnitt aufweist,
- wobei der dem Rohbau (18, 28) zugewandte Schenkel des Rahmenelementes (16, 16') von oben auf dem Rohbau (18, 28) angeordnet ist,
- wobei das Deckelelement (14, 14') von oben auf dem dem Rohbau (18, 28) zugewandten Schenkel des Rahmenelementes (16, 16') angeordnet und mittels der Dichtung (30) gegenüber diesem abgedichtet ist,
- wobei wenigstens ein Verstärkungselement (32) zum Verstärken des jeweiligen Rahmenelements (16, 16') vorgesehen ist,
- wobei zwischen dem zweiten Schenkel des Rahmenelementes (16, 16') und dem Deckelelement (14, 14') der Dachantrieb (21) angeordnet ist,
**dadurch gekennzeichnet,**
- **dass** das Verstärkungselement (32) ebenfalls im Wesentlichen Z-förmig ausgebildet und im Bereich des Übergangs zwischen den beiden Schenkeln des Rahmenelementes (16, 16') und des Dachantriebs (21) angeordnet ist.

2. Baukastensystem nach Anspruch 1,
**dadurch gekennzeichnet, dass**
sich die Deckelelemente (14, 14') und die Rahmenelemente (16, 16') hinsichtlich ihrer jeweiligen Breite oder Länge unterscheiden.

## Claims

1. Modular system for pop-up or sliding roofs (10, 10') for use at various roof openings (20, 24) of vehicle roofs (12, 22),
- wherein a pop-up or sliding roof comprises at least one cover element (14, 14'), kinematics with a roof drive (21) for adjusting the cover element (14, 14') between a position opening the roof opening and a position closing the roof opening, and a frame element for arranging the cover element and the kinematics with the roof drive on the respective vehicle roof,
- wherein frame elements (16, 16') and cover elements (14, 14') are provided for adaptation to different roof openings,
- wherein at least one sealing element (30) is provided, by means of which the respective cover element (14, 14') and the respectively associated frame element (16, 16') can be sealed against each other,
- wherein the respective frame element (16, 16') has a substantially Z-shaped cross-section,
- wherein the leg of the frame element (16, 16') which faces the body frame (18, 28) is located on the body frame (18, 28) from above,
- wherein the cover element (14, 14') is located from above on the leg of the frame element (16, 16') which faces the body frame (18, 28) and sealed against it by means of the seal (30),
- wherein at least one reinforcement element (32) is provided for reinforcing the respective frame element (16, 16'),
- wherein the roof drive (21) is located between the second leg of the frame element (16, 16') and the cover element (14, 14'),
**characterised in that**
- the reinforcement element (32) is also substantially Z-shaped and is located in the region of transition between the two legs of the frame element (16, 16') and the roof drive (21).

2. Modular system according to claim 1,
**characterised in that**
the cover elements (14, 14') and the frame elements (16, 16') differ in their respective width or length.

## Revendications

1. Système de construction modulaire d'un toit ouvrant entrebâillant ou coulissant (10, 10') destiné à être utilisé sur différentes ouvertures (20, 24) de toit de véhicule automobile (12, 22),
- un toit ouvrant entrebâillant ou coulissant présentant au moins un élément de recouvrement (14, 14'), une cinématique dotée d'un entraînement de toit (21) destiné à déplacer l'élément de recouvrement (14, 14') entre une position fermant l'ouverture de toit et ouvrant l'ouverture de toit, et un élément de cadre destiné à loger l'élément de recouvrement et la cinématique comprenant l'entraînement de toit sur le toit de véhicule automobile respectif,
- des éléments de cadre (16, 16') et des éléments de recouvrement (14, 14') étant fabriqués pour s'adapter aux différentes ouvertures de toit,
- au moins un élément d'étanchéité (30) qui permet de rendre étanche l'élément de recouvrement respectif (14, 14') et l'élément de cadre respectif (16, 16') l'un par rapport à l'autre,
- l'élément de cadre respectif (16, 16') présentant une section transversale essentiellement en forme de Z,
- le montant orienté vers la caisse nue (18, 28) de l'élément de cadre (16, 16') étant disposé à partir d'en haut sur la caisse nue (18, 28),
- l'élément de recouvrement (14, 14') étant disposé à partir du haut sur le montant de l'élément de cadre (16, 16') orienté vers la caisse nue (18, 28) et au moyen duquel le joint d'étanchéité est rendu étanche par rapport à ce dernier,
- il est prévu au moins un élément de renfort (32) destiné à renforcer l'élément de cadre (16, 16') respectif,
- entre le second montant de l'élément de cadre (16, 16') et l'élément de recouvrement (14, 14') étant disposé l'entraînement de toit (21), **caractérisé en ce que**
l'élément de renfort (32) étant également conçu sous la forme essentiellement en Z et est disposé dans la zone du passage entre les deux montants de l'élément de cadre (16, 16') et l'entraînement de toit (21).

2. Système de construction modulaire selon la revendication 1, **caractérisé en ce que** les éléments de recouvrement (14, 14') et les éléments de cadre (16, 16') sont différents en termes de leur largeur ou leur longueur.
